# EUROPEAN PATENT APPLICATION

(11) **EP 2 308 620 A1**
(43) Date of publication of application: **13.04.2011**
(21) Application number: 09800165.4
(22) Date of filing: 30.03.2009
(51) Int. Cl.: B23B 27/14, B23B 27/18, C04B 35/10, C04B 35/80

(54) **CUTTING INSERT AND CUTTING TOOL**

(30) Priority: 22.07.2008 JP 2008189224
(71) Applicant: NGK Spark Plug Co., Ltd., Nagoya-shi Aichi 467-8525 (JP)
(72) Inventor: ABUKAWA, Kohei, Nagoya-shi Aichi 467-8525 (JP); URASHIMA, Kazuhiro, Nagoya-shi Aichi 467-8525 (JP); SUZUKI, Yusuke, Nagoya-shi Aichi 467-8525 (JP); ITO, Tatsuya, Nagoya-shi Aichi 467-8525 (JP); TOYODA, Ryoji, Nagoya-shi Aichi 467-8525 (JP); KAMIKAWA, Koji, Nagoya-shi Aichi 467-8525 (JP)
(74) Representative: Jackson, Martin Peter
(86) International application number: PCT/JP2009/001460
(87) International publication number: WO 2010/010648

(57) **Abstract**

Provided are a cutting insert and a cutting tool, capable of maintaining cutting performance for a long time . The cutting insert has a cutting blade made of a ceramic including the base and the cutting blade integrated with each other, wherein the base has a first coefficient of thermal expansion larger than a second coefficient of thermal expansion that the cutting blade has; and a difference between the first coefficient and the second coefficient is from more than 0 ppm to not more than 3 ppm.

## Description

### TECHNICAL FIELD

The present invention relates to a cutting insert and a cutting tool, more particularly to a cutting insert capable of maintaining cutting performance for a long time and a cutting tool equipped with the cutting insert.

### BACKGROUND ART

Patent document 1 discloses an Al₂O₃SiC whisker cutting tool having a cutting blade part with a thickness from 2 mm or more to 4 mm or less made of an Al₂O₃-SiC whisker material and the other part made of an Al₂O₃ particulate material in order to provide a SiC-reinforced Al₂O₃ whisker cutting tool which has sufficient cost/performance to cut ferrous materials such as gray cast iron and ductile cast iron and includes a reduced amount of expensive SiC whiskers. (See paragraph [0004], claim 1 and Figure 1 of Patent document 1.)
Patent document 1 generally discloses that the amount of SiC whiskers included in the formed cutting blade is from 7 to 40% by volume, while SiC whiskers in an amount of 25% by volume or 32% by volume are employed in the working examples, and the employment of SiC whiskers only in these amounts is proven advantageous. (See paragraphs [0009], [0015], [0019] and [0020] of Patent document 1.)
There is no indication in Patent document 1 that cutting tools with a cutting blade including SiC whiskers in an amount outside the range of 25 to 32% by volume, for example in an amount from 7 to 25% by volume, are able to have sufficient cost/performance to cut ferrous materials such as gray cast iron and ductile cast iron. Generally speaking, the properties of the cutting blade of a cutting tool largely depend on the amount of the components included in the cutting blade; it is considered that the properties of a cutting blade vary greatly with how large or small the amount is.

Patent document 2 discloses a cutting tool made of a ceramic sintered body which has a layered structure including a base and an outer layer that is layered on at least part of a face of the base, wherein at least part of a face of the outer layer is used as flank of the cutting tool and the outer layer has a coefficient of thermal expansion smaller than a coefficient of thermal expansion of the base. (See claim 1 and Figure 3 of Patent document 2.)
Patent document 2 teaches: "The difference between the coefficient of thermal expansion of the base and that of the outer layer should preferably be from 0 .1 x 10⁻⁶ to 3. 0 x 10⁻⁶/K, which difference is an average value at temperatures from 25°C to 100°C. When the difference is less than 0.1 x 10⁻⁶/K, residual compression stress sufficient tomake the cutting tool excellent in fracture resistance may not occur." (See paragraph [0021] of Patent document 2.)
Reference will be made to Working Examples of this document . In Experimental Examples 1-11, the cutting blades are made of Si₃N₄-Yb₂O₃-Al₂O₃ and Si₃N₄-Yb₂O₃-Al₂O₃-WC and the difference in the coefficient of thermal expansion between the base and the outer layer, which is the cutting blade, is from 0.3 to 3.3 ppm. In Experimental Example 14, the cutting blade is made of Al₂O₃-SiC, and the difference in the coefficient of thermal expansion between the outer layer, the cutting blade, and the base is 2 ppm. (See Table 1 of Patent document 2.) The SiC used in Experimental Example 14 is powder in the form of minute particles.
Patent document 2 teaches that the cutting tool may be produced by a method which includes pressing a powdery raw material into a molded article with a predetermined shape by multistage pressing, lamination methods, hot pressing or the like; sintering the molded article to prepare a sintered body by gas pressured sintering, hot isostatic press sintering, or hot press sintering; and working the resultant sintered body into a predetermined shape. (See paragraph [0028] of Patent document 2.)
Now, reference is made to Working Examples of this document . In the working examples, the cutting tools are produced by "introducing a powder mixture for the base and a powder mixture for the outer layer into a mold in this order, and pressing the mixtures into a molded article by multistage pressing, or laminating with a uniaxial pressing machine"; "densifying the resulting molded article by cold isostatic pressing" to prepare a final molded article; and working the final molded article into a product with a predetermined shape. (See paragraphs [0028], [0029], [0030] and [0031] of Patent document 2.) As understood, the working examples prove that the cutting tools excellent in fracture resistance and wear resistance, which the invention disclosed in Patent document 2 claims to have achieved, were produced by multistage pressing and cold isostatic pressing. However, it is not clear from the disclosure of Patent document 2 whether or not cutting tools produced by the sheet lamination method and gas-pressured sintering are excellent in fracture resistance and wear resistance.
Furthermore, the invention disclosed in Patent document 2 relates to cutting inserts made of a ceramic that does not include whiskers. Patent document 2 is completely silent about a method of producing ceramics that include whiskers difficult to sinter with a technique of causing residual stress in the ceramics.

Improvement in properties such as thermal shock resistance as well as wear resistance and fracture resistance has been desired for cutting tools in recent years. Generally speaking, wear resistance tends to decrease as the amount of whiskers included in a cutting blade increases. Therefore cutting inserts whose wear resistance is not lowered when the amount of whiskers in the cutting blade decreases and which cutting inserts are excellent in fracture resistance and further in other properties such as thermal shock resistance, and cutting tools equipped with the cutting inserts have been desired.

### PRIOR ART DOCUMENTS

Patent document 1: JP H11(1999)-10409 A
Patent document 2: JP 2003-231005 A

### DISCLOSURE OF THE INVENTION

### [Problems to be Solved by the Invention]

An objective of the present invention is to provide a cutting insert excellent in wear resistance, fracture resistance and thermal shock resistance and capable of maintaining cutting performance for a long time, and a cutting tool. The present invention further aims to provide a cutting insert including a reduced amount of whiskers.

Another objective of the present invention is to provide a cutting tool equipped with the cutting insert.

### [Means to Solve the Problems]

The means to solve the aforementioned problems is:
(1) A cutting insert comprising a base and a cutting blade made of a ceramic including whiskers, the base and the cutting blade integrated with each other, wherein the base has a first coefficient of thermal expansion larger than a second coefficient of thermal expansion that the cutting blade has; and a difference between the first coefficient and the second coefficient is from more than 0 ppm to not more than 3 ppm.
   Preferred embodiments of means (1) are:
(2) The cutting insert according to means (1), wherein the cutting blade has a matrix made of mainly alumina, the whiskers are made of silicon carbide, and residual stress from more than 0 MPa to not more than 200 MPa is present in a surface of the cutting blade.
(3) The cutting insert according to means (1) or (2), wherein the base is made of a composite material having several phases.
(4) The cutting insert according to any one of means (1) - (3), wherein the base is made of a cermet.
(5) The cutting insert according to any one of means (1) - (3), wherein the base is made of a ceramic including silicon carbide particles with an average particle diameter from 1 µmto 5 µm
(6) The cutting insert according to any one of means (1) - (5), wherein a ratio W1/W2 of a thickness W1 of the cutting blade to a thickness W2 of the base is from more than 0. 1 to not more than 0.7.
(7) The cutting insert according to any one of means (1) - (6), wherein the cutting blade and the base are integrally formed by hot press sintering or by brazing with a brazing filler metal.
   The means further provides:
(8) A cutting tool equipped with the cutting insert according to any one of means (1)-(7).

### [Advantages of the Invention]

According to the present invention, the fact that the coefficient of thermal expansion of the base is larger than that of the cutting blade causes residual stress, which makes it possible to provide a cutting blade whose cutting performance is maintained for a long time even if the amount of whiskers included in the cutting insert is small.
Furthermore, the inventors of the present invention found that either or both of fractures in the cutting blade and wear of the cutting blade caused situations where a cutting insert could no longer cut workpieces. It is necessary to improve fracture resistance in order not to see fractures in the cutting blade, while it is necessary to improve wear resistance in order not to see wear of the cutting blade. However, improvement in fracture resistance of a ceramic molded article tends to reduce wear resistance thereof, while improvement in wear resistance of a ceramic molded article tends to reduce fracture resistance thereof. Conventional technology was not able to improve both of the fracture resistance of a ceramic molded article and the wear resistance thereof. Success in enabling a cutting insert of the present invention to exhibit cutting performance for a longer period of time means that the present invention also succeeded in improving both of wear resistance and fracture resistance, and further enhancing thermal shock resistance, which served to resist thermal load that repeatedly fell on the cutting insert during cutting, due to the residual stress caused by the difference between the coefficient of thermal expansion of the base and that of the cutting blade. The present invention is capable of providing a cutting insert which achieves a longer service life based on a new accomplishment in which fracture resistance, wear resistance and thermal shock resistance are simultaneously improved, which was impossible with conventional cutting inserts, owing to the innovations in which the cutting blade includes whiskers as an essential component, and the residual stress is present in the cutting blade.

The present invention also provides a cutting insert with a base whose coefficient of thermal expansion is capable of being easily adjusted.

The present invention further provides a long-life cutting tool advantageously excellent in wear resistance, fracture resistance and thermal shock resistance, due to its equipment with the aforementioned cutting insert.

### BRIEF DESCRIPTION OF THE DRAWINGS

[Figure 1] Figure 1 is an illustration showing an example of the cutting insert according to the present invention.
[Figure 2] Figure 2 is an illustration showing another example of the cutting insert according to the present invention.
[Figure 3] Figure 3 is an illustration showing an example of the cutting tool according to the present invention.
[Figure 4] Figure 4 is a back-scattered electron image of an example of the cutting insert according to the present invention.
[Figure 5] Figure 5 is an enlarged view of Figure 4.

### BEST MODE TO CARRY OUT THE INVENTION

The inventors of the present invention achieved the cutting insert of the invention with a unique viewpoint, which will be explained hereinafter, in order to simultaneously improve fracture resistance and wear resistance.
In order to produce a cutting insert made of a ceramic excellent in fracture resistance it is essential to make the ceramic include whiskers. Thus we studied cutting inserts with a cutting blade made of a ceramic into which SiC whiskers were incorporated, in place of a ceramic including SiC minute powder, which is included in the cutting blades prepared in the examples disclosed in Patent document 2 mentioned above.
When iron materials are ground with a cutting insert made of a ceramic including a large amount of whiskers, the whiskers themselves wear away. Thus, in order to improve the wear resistance of a cutting insert, the amount of whiskers has to be reduced. On the other hand, when the amount of whiskers is reduced for the purpose of wear resistance, a reduced amount of whiskers lowers fracture resistance and leads to a cutting insert with a short service life. Furthermore, if a cutting insert does not include whiskers, it has remarkably reduced fracture resistance compared with cutting inserts including whiskers. Therefore it is said that the inclusion of not less than a certain amount of whiskers is indispensable to cutting inserts. Since improvement in wear resistance caused deterioration in fracture resistance yet improvement in fracture resistance caused deterioration in fracture resistance, we reached the conclusion that a simultaneous realization of improving fracture resistance and wear resistance was not remotely possible through adjustment of the amount of whiskers and selection of kinds of ceramics. The basic idea of the present invention that seeks to simultaneously realize improvement in fracture resistance and wear resistance and to lengthen the service life of a cutting insert is that the cutting blade includes whiskers in such an amount as not to reduce the fracture resistance and the wear resistance, and the fracture resistance is kept from being lowered by residual stress generated in the cutting insert. An adjustment of the coefficient of thermal expansion of the base in relation to that of the cutting blade to a predetermined range in a cutting insert which comprises a cutting blade made of a ceramic including whiskers and a base made of a ceramic and/or cermet which does not include whiskers or includes whiskers in an amount less than the amount of the whiskers included in the cutting blade wherein the cutting blade and the base are integrated with each other is capable of achieving a generation of residual stress in the cutting insert.

Examples of the whiskers included in the cutting blade may include graphite whiskers, alumina whiskers, silicon nitride whiskers, mullite whiskers, titanium carbide whiskers and titanium boride whiskers. Preferable are silicon carbide whiskers. Because the whiskers may sometimes react with workpieces, kinds of whiskers should suitably be selected depending on the kinds of workpieces. The size of a whisker is preferably such that the average diameter is from 0.1 to 1 µmand the length along the longitudinal axis is from 2 to 100 µm It will be easier to improve the fracture resistance of the cutting insert according to the present invention with silicon carbide whiskers having the preferable size.

For the ceramic of which the cutting blade is made may be selected kinds of ceramics that do not react with workpieces, in the same way as for the whiskers. Examples of the ceramic may include those made of aluminum oxide, silicon carbide, titanium carbide and a combination of aluminum oxide with silicon carbide and/or titanium carbide.
The ceramic of which the cutting blade is made should be in the form of a powder with an average particle diameter from 0. 1 to 2 µm The employment of such powdery ceramic makes it easier to disperse the whiskers in the ceramic and to sinter the molded article to be obtained.
The ceramic and the whiskers should be mixed by dry-mixing or wet-mixing with a suitable mixer such as a ball mill. When the ceramic and the whiskers are mixed by wet-mixing, acetone, methanol, ethanol, or the like may be used as solvent. The shape and size of the cutting blade should be decided depending on factors such as kinds of expected workpieces and the situations in which the cutting insert of the invention will be used.
A chemical composition analysis has revealed that the ratio of the amount of the whiskers included in the cutting blade to that of the ceramic included therein is essentially the same as the ratio of the amount of the whiskers to be mixed into a raw material for the cutting blade to that of the ceramic to be mixed into the raw material. The whisker content of the cutting blade should preferably be in the range of 25% to 40% by volume to the entire volume of the cutting blade in terms of the amount of the whiskers to be mixed into a raw material. Cutting blades with whiskers in an amount less than the lower limit of the range tend to have lowered fracture resistance, while those with whiskers in an amount larger than the upper limit tend to show that the whiskers wear down considerably. Cutting blades with whiskers in an amount within the range, when the coefficient of thermal expansion of the base is larger than that of the cutting blade by a value within a predetermined range, are capable of further providing the cutting insert whose cutting performance is maintained for a much longer time.

The cutting blade can be formed as an integral part of the base, which will be explained hereinafter, if a raw material for the cutting blade is pressure-sintered simultaneously with a raw material for the base. Also, a precursor of the cutting blade, which will be the cutting blade, and a precursor of the base, which will be the base, may be separately made.
Subsequently, the precursors may be brazed to a cutting insert.

The base should have a first coefficient of thermal expansion which is larger than a second coefficient of thermal expansion that the cutting blade has. The difference between the first coefficient and the second coefficient should preferably be from more than 0 ppm to not more than 3 ppm.
When the difference between the first coefficient of the base and the second coefficient of the cutting blade is within the range, residual stress occurs between the cutting blade and the base upon the production of a cutting insert of the present invention due to the fact that the cutting blade and the base have been made by sintering. The residual stress between the cutting blade and the base provides a cutting insert of the present invention with improved fracture resistance. As a result of the improvement in fracture resistance, the cutting insert of the invention is capable of maintaining cutting performance for a longer time. Furthermore, since the adjustment of the coefficients of thermal expansion provides the cutting insert with a long-lasting cutting performance, this achievement enables the cutting blade to include a lesser amount of whiskers, which contributes to a decrease in the amount of expensive whiskers to be used.

When the difference between the first coefficient of thermal expansion of the base and the second coefficient of thermal expansion of the cutting blade is 0 ppm, residual stress does not occur between the cutting blade and the base, which means that the fracture resistance of a cutting insert according to the present invention cannot be improved. Also, when the first coefficient is larger than the second coefficient by more than 3 ppm, too large residual stress occurs, which may cause cracks in the base. Cracks in the base reduce the fracture resistance of a cutting insert according to the present invention. Furthermore, when the first coefficient of thermal expansion of the base is smaller than the second coefficient of thermal expansion of the cutting blade, the residual stress works in the opposite direction compared with a residual stress which works when the first coefficient is larger than the second coefficient by a value from more than 0 ppm to not more than 3 ppm, and thus lowers the fracture resistance of the cutting insert according to the present invention.

The cutting blade is made of a ceramic including whiskers. Although there is no special limitation on the combination of the ceramic and the whiskers, preferable is a combination of alumina for a major part of the matrix and whiskers of silicon carbide. This combination improves the wear resistance of a cutting insert and the fracture resistance thereof in a well-balanced manner.
The residual stress occurring in a cutting blade whose matrix of the cutting blade is mainly made of alumina and whose whiskers are made of silicon carbide, when the stress in the surface of the cutting blade is from more than 0 MPa to not more than 200 MPa, is capable of improving fracture resistance without marring wear resistance. The residual stress is also capable of arresting the occurrence of cracks. Even if cracks occur, they grow slowly. Thus the cutting blade is suitable for a cutting tool capable of being used for a long time. Furthermore, the residual stress of more than 0 MPa to not more than 200 MPa in the surface of the cutting blade is capable of stabilizing cutting performance of the cutting insert. The residual stress of 0 MPa, which means that there is no residual stress between the cutting blade and the base, is not capable of improving the fracture resistance of a cutting insert of the present invention.
An adjustment of the difference between the first coefficient of thermal expansion of the base and the second coefficient of thermal expansion of the cutting blade may achieve the adjustment of the residual stress. Other means to adjust the residual stress may include selection between the use of brazing filler material and the non-use thereof; and adjustment of the sintering temperature, the pressure of hot-pressing, the thickness of the cutting blade, the shape of the cutting blade, the elastic modulus of the materials, Poisson's ratio of the materials, the anisotropy of the tissue, the wettability between the cutting blade and the base, and other factors.

The coefficient of thermal expansion of the base and the cutting blade may be measured by, for example, the method explained under the title of "Measuring Method of Thermal Expansion of Fine Ceramics by Thermomechanical Analysis" according to JIS R 1618.
The residual stress of a cutting blade may be measured by methods explained in "Standard Methods of Measuring Stress by means of X-ray -Ceramics Edition-" (JMSM-SD1-00) published by The Society of Material Science, Japan.

Materials for the base of a cutting insert according to the present invention may be ceramics which are the same as or similar to those for the cutting blade, as long as the base has a coefficient of thermal expansion different from that of the cutting blade by a value within the aforementioned range. The ceramic of the cutting blade and that of the base may be the same as or different from each other. A cermet may be used for the material of the base together with the ceramic or in place of the ceramic. Examples of the cermet may include TiCN-Ni-Co cermets and TiCN-Ni cermets formed from a binding phase that is mainly made of Ni or a combination of Ni and Co, and a hard phase mainly made of a carbonitride phase which includes Ti as major metal component and further includes at least one of V, Cr, Zr, Nb, Mo, Hf, Ta and W. Ceramics and/or cermets suitable for forming the base are generally in the form of powder whose fine particles have an average particle diameter from 0.1 to 2 µm.
The base may include whiskers and/or powder, as long as the coefficient of thermal expansion of this base is larger than that of the cutting blade by a value within the range explained above. From another point of view, in order to make the coefficient of thermal expansion of the base different from that of the cutting blade, the base may be made of a cermet and/or a ceramic different from the ceramic of the cutting blade, a ceramic and/or a cermet including whiskers in an amount smaller than the amount of whiskers included in the cutting blade, a ceramic and/or a cermet including powder in place of whiskers, or materials completely different from the ceramic of the cutting blade.

A preferable example of the base is a base made of a composite material having several phases. When the base is made of a composite material, an adjustment to the amount of each of the several ceramics and/or cermets controls the coefficient of thermal expansion more easily. Therefore it becomes easier to adjust the difference between the coefficient of thermal expansion of the base and that of the cutting blade of a cutting insert according to the present invention.

A particularly preferable material for the base is a composite ceramic composed of a ceramic with a cermet or silicon carbide particles incorporated into the ceramic.
The silicon carbide particles to be incorporated into the ceramic should have a particle diameter from 1 µm to 5 µm. The silicon carbide particles with a particle diameter from 1 µm to 5 µm is capable of checking development of cracks if cracks occur, and capable of providing good sinterability. Thus the incorporation of such silicon carbide particles is preferable. The main phase of the ceramic base should preferably be made of alumina, because it is easy to adjust the coefficient of thermal expansion and residual stress of alumina. The average particle diameter of silicon carbide particles may be measured with optical microscopes or electron microscopes.
Examples of the cermet may include TiCN-Ni-Co cermets and TiCN-Ni cermets formed from a binding phase that is mainly made of Ni or a combination of Ni and Co, and a hard phase mainly made of a carbonitride phase which includes Ti as major metal component and further includes at least one of V, Cr, Zr, Nb, Mo, Hf, Ta and W.

The cutting insert of the present invention has the base and the cutting blade that are integrated with each other.
A two-layered structure or a three-layered structure may be employed for a cutting insert of the present invention. Since the cutting blade of a cutting insert of the present invention is used to cut workpieces, the insert is formed so that the cutting blade is exposed. When a two-layered structure is employed, a cutting blade may simply be superimposed on a base. When a three-layered structure is employed, a base in the shape of a plate may be sandwiched by two cutting blades.

The method for joining a cutting blade to a base during preparation of a cutting insert may be hot isostatic press sintering, hot press sintering, brazing or the like. A preferable method for joining a cutting blade to a base is hot press sintering. Another preferable method is brazing with a brazing filler material in which a precursor of the cutting blade and a precursor of the base are brazed with a brazing filler material. Hot press sintering typically has a process which comprises placing base raw material powder necessary to form a base in a mold; placing cutting-blade raw material powder necessary to form a cutting blade on a surface of the base raw material powder in the mold so that the cutting-blade raw material powder covers the base rawmaterial powder; and pressing the raw material powders uniaxially while heating the powders to a predetermined temperature. The pressing during a hot press sintering provides a cutting blade and a base with a strong chemical bond. More specifically, for example, alumina components included in the base and those included in the cutting blade or blades are sintered to form cross-links bridging the base and the cutting blade or blades. Thus cutting inserts having a base and a cutting blade or cutting blades integrated with each other, formed by hot press sintering, have a large adhesive strength and do not experience separation of the cutting blade or blades from the base during cutting operation. Also, cutting inserts having a base and a cutting blade or cutting blades integrated with each other, formed by brazing with a metal filler material, have a large adhesive strength and do not experience separation of the cutting blade or blades from the base during cutting operation, compared with cutting inserts formed from a base precursor and a cutting-blade precursor or cutting-blade precursors glued to the former with resin adhesive. It is because the cutting blade and the base have a strong chemical bond through a metal filler material.
When the base is made of a ceramic, hot press sintering provides a chemical bonding which is realized by cross-links between the base and the cutting blade, resulting from a ceramic, such as alumina, of the cutting blade sintered with the ceramic, such as alumina, of the base. When the base is made of a cermet, hot press sintering provides a chemical bonding which is realized by a solid solution where the ceramic, such as alumina, in the cutting blade, and metals included in the cermet of the base, for example, transition metals such as iron, nickel and cobalt, dissolve each other. Furthermore, the brazing provides chemical bonds between the ceramic such as alumina and/or cermet having transition metals and other metals included in the base, and a metal such as titanium included in the brazing filler material, which strongly binds the cutting blade with the base. Therefore a brazing filler material for a preferable brazing should be an active brazing filler material including titanium and the like.
As understood, chemical bonds between metal particles included in the cutting blade and those in the base, or chemical bonds between metal particles included in the cutting blade, those in the base and those in the brazing filler metal achieve a strongly stuck state, whether a cutting insert of the present invention is made by hot press sintering or brazing. The cutting insert with whiskers included therein according to the present invention has improved fracture resistance. Hot press sintering or brazing further enhances fracture resistance.

The thickness of the cutting blade of a cutting insert according to the present invention, or the distance through the cutting blade across the layering, is normally from not less than 0.8 mm to not more than 2 mm. When the thickness of the cutting blade is less than the lower limit of the range, cracks occurring in the cutting blade during cutting or grinding may reach the interface between the cutting blade and the base in a short time, although it advantageously reduces the amount of expensive whiskers used in the cutting blade. On the other hand, when the thickness exceeds the upper limit of the range, the cost of producing cutting inserts is increased and the residual stress in the cutting blade tends to decrease as the distance from the base across the layering is increased.
The cutting insert of the present invention should preferably have a ratio W1/W2 of the thickness W1 of the cutting blade to the thickness W2 of the base of more than 0.1 to not more than 0.7. When the ratio W1/W2 is from more than 0.1 to not more than 0.7, it takes a long time for cracks occurring in the cutting blade to develop to the base. Another advantage is that the specified ratio leads to a reduction in the amount of the used whiskers to a desired extent. Furthermore, the ratio allows residual stress occurring between the base and the cutting blade to work effectively and to be maintained favorably.
The cutting insert according to the present invention is excellent in wear resistance, fracture resistance and thermal shock resistance and is capable of keeping the cutting performance thereof for a long time. These properties enable the cutting insert to easily work various mechanical components, especially components for airplanes. More specifically, many of the airplane components are made of heat-resistant alloy that is hard to cut because of its high strength and high melting point. Heat is sometimes generated while such components are being cut, which raises the temperature of the cutting insert to a high level. Then, the cutting insert is alternately and repeatedly subjected to a heat exposure at an excessively high temperature and a cooling process where the overheated insert is cooled. Examples of the heat-resistant alloy may include superalloys such as INCONEL 718, WASPALOY and RENEs. These heat-resistant alloys may be employed for components that are typically used in high temperature applications, such as those of jet engines of airplanes, steam turbines, and gas turbines. Since the cutting insert of the present invention has a cutting blade and a base wherein the coefficient of thermal expansion of the former is different from that of the latter, which difference leads to occurrence of residual stress in the cutting insert during cutting due to high temperatures, the cutting insert of the present invention will be able to easily cut workpieces which are conventionally hard to cut and which tend to generate heat to expose the cutting insert to high temperatures.

We will explain an embodiment of the cutting insert and cutting tool according to the present invention, referring to the figures.

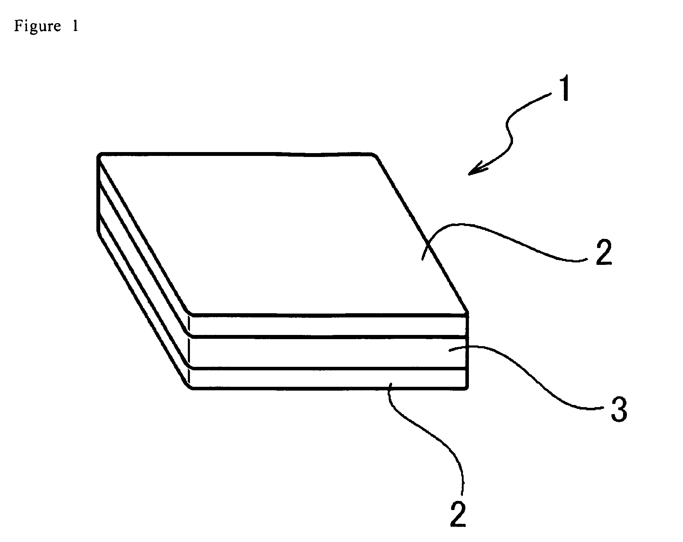

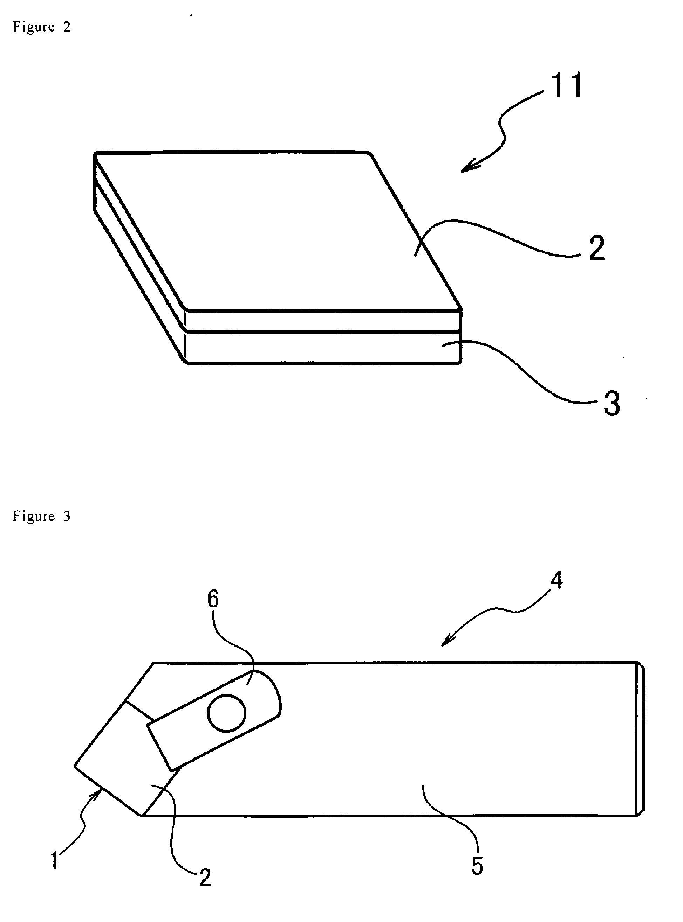

Figure 1 shows a cutting insert 1, which is an embodiment of the present invention. The cutting insert 1 is a sintered body having a cutting blade 2 and a base 3 integrated with each other. As shown in Figure 1, the cutting insert 1 has a three-layered structure composed of the base 3 sandwiched between a pair of cutting blades 2,2 and integrated therewith. The difference between the coefficient of thermal expansion of the cutting blade 2 and that of the base 3 provides the cutting insert 1 with residual stress which works so that the base 3 draws the cutting blades 2 to itself. When the cutting insert of the present invention is used as a negative-type one, it should preferably have a three-layered structure shown in Figure 1. Figure 2 shows a cutting insert 11, another embodiment of the present invention. The cutting insert 11 is different from the cutting insert 1 in the number of layers. Specifically, the cutting insert 11 has a two-layered structure, as shown in Figure 2. The properties other than the number of layers, such as raw materials, the production process and the shape of the cutting insert 11, are the same as or similar to those of the cutting insert 1. If a positive-type cutting insert is required, the cutting insert should have a two-layered structure composed of the base 3, one face of which is joined with the cutting blade 2 and integrated therewith.

Figure 3 shows a cutting tool 4, which is an embodiment of the present invention. The cutting tool 4 has a cutting insert 1, a holder 5 and a fastener 6. The holder 5 has a recess at one end thereof, the shape of which is complementary to the planar shape of the cutting insert 1 so as to receive the cutting insert 1 . The fastener 6 is a member to press the cutting insert 1 disposed in the recess of the holder 5 in order to prevent the insert 1 from dropping off the holder 5 during cutting.

### EXAMPLES

Working and comparative examples of the present invention will be shown hereinafter. Examples in which a base is combined with a cutting blade by hot-press sintering and examples in which a base is joined with a cutting blade by brazing will be shown in the following.

### (i) Hot-pressing Sintering

Raw material powders for cutting blades and bases were prepared so that they had the composition shown in Table 1. The powders named A to D, H to Q, S and U were those used for bases in the following examples, while the powders named E to G, K, R, T and V were those used for cutting blades.

The aluminum oxide shown in Table 1 was a commercial powder having an average particle diameter of 0.4 µm. The silicon carbide was a commercial powder having an average particle diameter from 0. 5 to 6. 0 µm. The silicon carbide whiskers were a commercial product whose average diameter was 0.8 µm and whose average length along the longitudinal axis was from 10 to 50 µm. Furthermore, for the yttrium oxide was employed a commercial powder with an average particle diameter of 1.0 µm, and for the zirconium oxide a commercial powder with an average particle diameter of 2.0 µm. In Table 1, cermet A, cermet B and cermet C were respectively a "C7X" product, a "T15" product and an "N40" product, all manufactured by NGK SPARK PLUG CO., LTD. Also, the Al₂O₃-TiCN ceramic and the Al₂O₃ ceramic were respectively an "HC2" product and an "HCl" product, both manufactured by the same company.

The coefficient of thermal expansion of the cutting blades and bases was measured after the cutting inserts were prepared.

**[Table 1]**

| Material powder | Composition (vol. %) | | | | Particle diameter of silicon carbide (µm) | Coefficient of thermal expansion (ppm/K) |
|---|---|---|---|---|---|---|
| | Aluminum oxide | Silicon carbide | Silicon carbide whiskers | Sintering aid | | |
| A | 78 | 20 | - | 2% Y₂O₃ | 3.0 | 7.6 |
| B | 73 | 25 | - | | 3.0 | 7.4 |
| C | 68 | 30 | - | | 3.0 | 7.3 |
| D | 63 | 35 | - | | 3.0 | 7.2 |
| J | 53 | 45 | - | | 3.0 | 6.9 |
| K | 43 | 55 | - | | 3.0 | 6.7 |
| E | 63 | - | 35 | 2% Zr₂O₃ | - | 7 |
| F | 70 | - | 28 | | - | 7.2 |
| G | 70 | - | 30 | - | - | 7.2 |
| Q | 75 | - | 25 | - | - | 7.4 |
| R | 75 | 25 | - | - | 0.5 | 7.4 |
| S | 63 | - | 32 | 5% Zr₂O₃ | - | 7.2 |
| T | 63 | 32 | - | | 0.5 | 7.2 |
| U | 68 | - | 32 | - | - | 7.2 |
| V | 68 | 32 | - | - | 0.5 | 7.2 |
| H | Cermet A | | | | - | 9.1 |
| I | Cermet B | | | | - | 8.4 |
| P | Cermet C | | | | - | 9.9 |
| L | Al₂O₃-TiC ceramic | | | | - | 7.9 |
| M | Al₂O₃ ceramic | | | | - | 7.8 |
| N | 73 | 25 | - | 2 % Y₂O₃ | 0.5 | 7.4 |
| O | 73 | 25 | - | | 6.0 | 7.4 |

Next, cutting inserts were prepared. The difference between the coefficient of thermal expansion of the cutting blade and that of the base, the ratio of the thickness of the cutting blade to that of the base of the prepared cutting inserts are shown in Table 2. The results of a cutting test are also shown in the same table. The prepared cutting inserts were those having only a cutting blade that included whiskers and those having a cutting blade and a base integrated with each other.

"I" in the column of "Insert No." of Table 2 denotes a cutting insert that used only the raw material powder named "E" in Table 1. "II" denotes a cutting insert that used only the raw material powder named "G" in Table 1. Cutting inserts "I" and "II" were prepared in the way explained in the following.

The aluminum oxide powder and the silicon carbide whiskers were combined at the predetermined composition shown in Table 1. The resultant, together with acetone as solvent, was mixed with a ball mill for 24 hours. Then, the acetone was removed. The resulting base powder was hot-press sintered. Specifically, a graphite mold is filled with the base powder, and the mold with the base powder was uniaxially pressed at a pressure of 19.6 MPa and kept in this state for an hour at 1800°C in an argon gas atmosphere at a pressure of 20.0 KPa. Aplanar sintered body thus obtained was cut with a diamond wheel, which provided a sintered body with a shape similar to the shape of a final product of the cutting insert. Furthermore, the sintered body was ground in such a way that the face of the sintered body that had been uniaxially pressed would be the rake face, to a desired cutting insert with an SNGN-120408 shape according to ISO Standards.

The cutting inserts, other than those named "I" and "II", in Table 2, or those composed of a cutting blade and a base integrated with each other, were prepared in the following way.

A graphite mold was filled with the base powder for each ceramic layer and the base powder for the corresponding base in the table. The volume of the base powder for the ceramic layer and that of the base powder for the base were adjusted so that the ratio of the thickness of the ceramic layer to that of the base would be the value shown in Table 2. Hot-press sintering was carried out under the same conditions as those for the preparation of cutting inserts I and II. The resulting planar sintered body was cut and ground under the same conditions as those for cutting inserts I and II, and a cutting insert with the same shape was obtained. The cutting insert was cut in the middle after the sintering, and the joint between the cutting blade and the base in the cross-section was observed with a scanning electron microscope at 5000 magnifications. The observation ensured that the sintered insert was in such a state that the base and the cutting blade were strongly joined without non-joinedportions and that alumina particles included in the base and those included in the cutting blade bonded chemically to form bridges linking the base and the cutting blade.

Furthermore, the coefficient of thermal expansion of each obtained cutting insert was measured. The measurement was carried out in the following way: Each cutting insert was ground and formed into a test piece with the three dimensions of 5 mm x 5 mm x 10 mm, and an average coefficient of thermal expansion of the test piece was measured in an atmosphere of an inert gas at temperatures from room temperature to 1000°C according to JIS R1618.
Then, the residual stress of each cutting insert was measured by an analysis of the surface of the central portion of the rake face. The method was according to "Standard Methods of Measuring Stress by means of X-ray - Ceramics Edition -" (JMSM-SD1-00) published by The Society of Material Science, Japan. The surface was measured with the diffraction ray of X-ray with Cr-Kα radiation from the (220) plane of alumina (2θ=148.73°), having a focal spot diameter of 2 mm.

Subsequently, an interrupted cutting test of each obtained cutting insert was carried out under the following conditions. The performance was graded according to the number of protrusions that the cutting insert cut, the protrusions formed in a workpiece. The test began with a feed rate: f = 0.6 mm/rev. The feed rate was increased by 0.05 mm/rev. with every five protrusions. The test was carried out with three cutting inserts and the performance was graded by the average number of cut protrusions.
Workpiece: FC200
Shape of Cutting Insert: ISO SNGN120408-TN
Cutting Conditions: V = 150 m/min. , f = 0.6-0.8 mm/rev., d = 2.0 mm, Dry

**[Table 2]**

| Insert No. | Joining | Substrate | Cutting blade | Difference*1) | *2) (MPa) | W1 | W2 | W1/W2 | No. *3) |
|---|---|---|---|---|---|---|---|---|---|
| 1 | H.P.*4) | A | E | 0.6 | 170 | 0.5 | 4.26 | 0.1 | 8.9 |
| 2 | H.P. | A | E | 0.6 | 95 | 0.9 | 3.86 | 0.2 | 14 |
| 3 | H.P. | A | E | 0.6 | 55 | 1.5 | 3.26 | 0.5 | 14.8 |
| 4 | H.P. | A | E | 0.6 | 40 | 2 | 2.76 | 0.7 | 14.8 |
| 5 | H.P. | A | E | 0.6 | 35 | 2.38 | 2.38 | 1 | 9.3 |
| 6 | H.P. | A | E | 0.6 | 10 | 3.86 | 0.9 | 4.3 | 8.5 |
| 7 | H.P. | B | E | 0.4 | 35 | 1.5 | 3.26 | 0.5 | 13.3 |
| 8 | H.P. | C | E | 0.3 | 25 | 1.5 | 3.26 | 0.5 | 11.4 |
| 9 | H.P. | D | E | 0.2 | 20 | 1.5 | 3.26 | 0.5 | 10.4 |
| 10 | H.P. | H | E | 2.1 | 190 | 1.5 | 3.26 | 0.5 | 22.5 |
| 11 | H.P. | I | E | 1.4 | 130 | 1.5 | 3.26 | 0.5 | 20.1 |
| 12 | H.P. | A | F | 0.4 | 40 | 1.5 | 3.26 | 0.5 | 13.7 |
| 13 | H.P. | A | G | 0.4 | 45 | 1.5 | 3.26 | 0.5 | 13.4 |
| 14 | H.P. | L | E | 0.9 | 80 | 1.5 | 3.26 | 0.5 | 16.5 |
| 15 | H.P. | M | E | 0.8 | 85 | 1.5 | 3.26 | 0.5 | 15.9 |
| 16 | H.P. | N | E | 0.6 | 50 | 1.5 | 3.26 | 0.5 | 10 |
| 17 | H.P. | O | E | 0.6 | 60 | 1.5 | 3.26 | 0.5 | 9.5 |
| I | H.P. | E | | 0 | 0 | 4. | 76 | - | 6.1 |
| II | H.P. | G | | 0 | 0 | 4. | 76 | - | 6.5 |
| III | H.P. | J | E | -0.1 | -20 | 1.5 | 3.26 | 0.5 | 4.1 |
| IV | H.P. | K | E | -0.3 | -20 | 1.5 | 3.26 | 0.5 | 2.3 |
| V | H.P. | P | K | 3.2 | 210 | 1.5 | 3.26 | 0.5 | 5.2 |
| VI | H.P. | R | Q | 0 | 0 | 1.5 | 3.26 | 0.5 | 5.8 |
| VII | H.P. | T | S | 0 | 0 | 1.5 | 3.26 | 0.5 | 5.9 |
| VIII | H.P. | V | U | 0 | 0 | 1.5 | 3.26 | 0.5 | 5.5 |

| | | | | | | | | | |
|---|---|---|---|---|---|---|---|---|---|
| Notes: *1) "Difference" means the difference between the coefficient of thermal expansion of the base and that of the cutting blade, the result of subtracting the latter from the former. *2) Compressive stress. *3) "No." is the average number of protrusions that the three cutting inserts cut. | | | | | | | | | |

In Table 2, Insert Nos. 1-17 were working examples, while Insert Nos. I-VIII were comparative examples. Insert Nos. VI, VII and VIII were comparative examples prepared respectively according to "Working Example 1", "Working Example 2" and "Working Example 3" of Patent document 1.

The properties of Insert Nos. 1-17 will be compared with those of Insert Nos. I-VIII in Table 2. When the coefficient of thermal expansion of the base was larger than that of the cutting blade by a value in the range of more than 0 ppm to not more than 3 ppm, the average number of cut protrusions was large. In other words, such a difference in the coefficient of thermal expansion enabled the cutting insert to keep the cutting performances for a longer time. In still other words, such a cutting insert was considered to have improved fracture resistance. On the other hand, there existed no residual stress in cutting inserts VI-VIII whose bases had a coefficient of thermal expansion that is not different from the coefficient of thermal expansion of the cutting blade. The average number of protrusions that were cut by these cutting inserts is much the same as that cut by cutting inserts I and II, which were composed of only material E or G. In other words, we see no advantages resulting from the cutting blade and the base made as an integral part of each other.

Cutting inserts I and II are almost the same as conventional cutting inserts including whiskers. Therefore comparison between cutting inserts 1-17 and cutting inserts I-II shows that the cutting insert of the present invention exhibits the cutting performances for a longer time than conventional cutting inserts including whiskers in their entirety.

Comparison between cutting inserts 10 and 11 and cutting insert 3 reveals the cutting inserts whose base was made of a cermet had a larger average number of cut protrusions. This fact means that employment of a cermet for the base enables the cutting insert to keep the cutting performances for even a longer time.

From comparison between cutting inserts 2-4 and cutting inserts 1 and 5 summarized in Table 2, it is understood that when the ratio W1/W2 of the thickness of the base to that of the cutting blade was in the range of more than 0.1 to not more than 0. 7, the average number of cut protrusions was even larger. It means that the ratio within the specified range enables the cutting insert to further lengthen a time period for which the cutting performances were ensured.

### (ii) Brazing

Cutting inserts whose cutting blade and base were unified were prepared in the same way as in the way under item (i) hereinbefore. The prepared inserts were numbered from 18 to 22. Cutting inserts made of only ceramics including whiskers were also prepared and named "IX" and "X".

Each of the cutting inserts 18-22 was prepared in the following way: A planar sintered body for a cutting blade, formed from a ceramic including whiskers, was prepared in the same way as that for Insert Nos. I and II under item (i) hereinbefore. The thickness of the ceramic including whiskers was adjusted to a predetermined value by grinding. Then, a paste-like active silver brazing filler material including chemically active titanium whose product name was TB629T manufactured by TOKYO BRAZE Co., Ltd. was applied to an upper face of a base with an ISO 120412 shape. The brazing filler material was heated to 800°C, whereby the ceramic including whiskers was joined to the base. Furthermore, the resultant was ground in such a way that the face of the sintered body that had been uniaxially pressed would be the rake face, to a desired cutting insert with an SNGN-120412 shape according to ISO Standards. The cutting insert was cut in the middle after the joining, and the joint between the cutting blade and the base in the cross-section was observed with a microscope at 500 magnifications. The observation ensured that the obtained insert was in such a state that the base and the cutting blade were strongly joined without non-joined portions.

Each of Insert Nos. IX and X was formed from a sintered body which was made only from a ceramic including whiskers by hot-press sintering. The sintered body was ground in such a way that the face of the sintered body that had been uniaxially pressed would be the rake face, to a non-inventive cutting insert with an SNGN-120412 shape according to ISO Standards. Note that cutting inserts IX and X were respectively the same as cutting inserts I and II.

The coefficient of thermal expansion of each cutting insert was measured with the same method as under item (i) hereinbefore. A cutting test was carried out in the following way: Each cutting insert was subjected to groove processing, and thus mechanically loaded. The insert was also thermally loaded by repetition of the groove processing. Under these conditions, the performance was graded according to the number of grooves that the cutting insert cut in a workpiece until the cutting blade fractured. The test began with a feed rate: f = 0.3 mm/rev. The feed rate was increased by 0.05 mm/rev. with every five protrusions. The test was carried out with three cutting inserts and the performance was graded by the average number of formed grooves.
Workpiece: INCONEL718
Shape of Cutting Insert: ISO SNGN120412-TN
Cutting Conditions: V= 200 m/min. , f = 0. 3-0. 45 mm/rev. , d = 1.5 mm

**[Table 3]**

| Insert No. | Joining | Substrate | Cutting blade | Difference*1) | *2) (MPa) | W1 | W2 | W1/W2 | No. *3) |
|---|---|---|---|---|---|---|---|---|---|
| 18 | Brazing | A | E | 0.6 | 10 | 0.9 | 3.86 | 0.2 | 3.5 |
| 19 | Brazing | H | E | 2.1 | 50 | 0.9 | 3.86 | 0.2 | 4.5 |
| 20 | Brazing | I | E | 1.4 | 30 | 0.9 | 3.86 | 0.2 | 4.1 |
| 21 | Brazing | L | E | 0.9 | 20 | 0.9 | 3.86 | 0.2 | 3.5 |
| 22 | Brazing | M | E | 0.8 | 20 | 0.9 | 3.86 | 0.2 | 3.4 |
| IX | - | E | | 0 | 0 | 4.76 | | - | 1.5 |
| X | - | G | | 0 | 0 | 4.76 | | - | 1.7 |

| | | | | | | | | | |
|---|---|---|---|---|---|---|---|---|---|
| Notes: *1) "Difference" means the difference between the coefficient of thermal expansion of the base and that of the cutting blade, the result of subtracting the latter from the former. *2) Compressive stress. *3) "No. " is the average number of grooves that the three cutting inserts cut. | | | | | | | | | |

In Table 3, Insert Nos. 18-22 were working examples, while Insert Nos. IX-X were comparative examples.

The properties of Insert Nos. 18-22 will be compared with those of Insert Nos. IX-X in Table 3. When the coefficient of thermal expansion of the base was larger than that of the cutting blade by a value in the range of more than 0 ppm to not more than 3 ppm, the average number of cut grooves was large. In other words, the results of the working examples indicate that the cutting inserts of the invention were hard to fracture even when they were repeatedly exposed to mechanical impact and great changes in temperature. In still other words, the results show that the cutting inserts of the invention were excellent in fracture resistance, wear resistance and thermal shock resistance, which means that the cutting inserts were enabled to keep the cutting performances for a longer time.

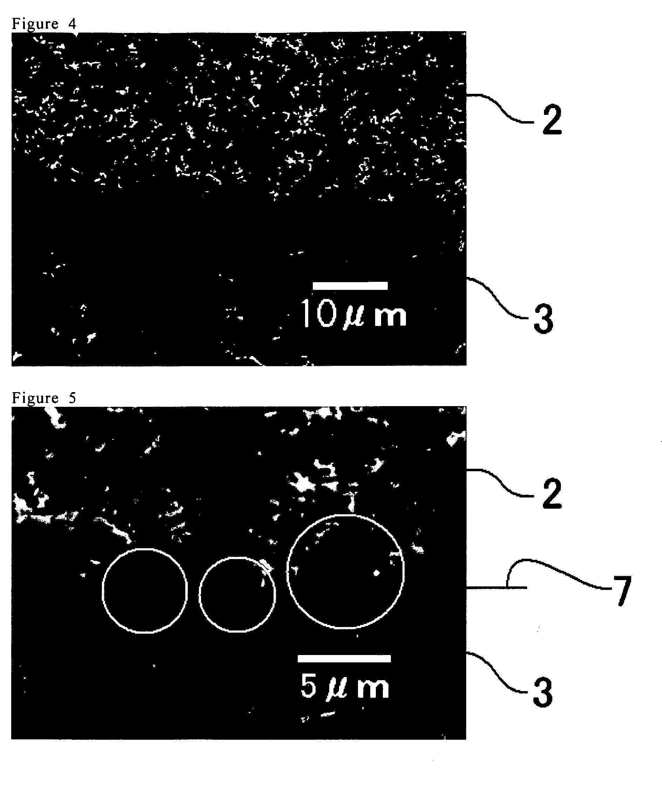

Back-scattered electron images, which may sometimes be called compositional images hereinafter, of the lamination interface between the cutting blade and the base of cutting insert 12, produced by a SEM, are shown in Figures 4 and 5. An upper half of the compositional image shown in Figure 4 is an image of the cutting blade 2, and a lower half of the image is an image of the base 3. The compositional image shown in Figure 4 is an image obtained through observation of the cross-section of the cutting blade and base of cutting insert 12 with a scanning electron microscope at 2000 magnifications. It is clearly understood from the compositional image in Figure 4 that the cutting blade 2 and the base 3 are laminated.
The compositional image shown in Figure 5 is an enlarged image of a part of Figure 4. The image shown in Figure 5 is an image obtained through observation of cutting insert 12 at 5000 magnifications. The lamination interface 7 between the cutting blade 2 and the base 3 in Figure 5 was decided based on how the state of the grains changes in the lamination interface of the cutting blade 2 and the base 3 shown in the compositional image of Figure 4. Also, circles drawn in white in Figure 5 indicate the locations where alumina particles included in the cutting blade 2 and those included in the base 3 are cross-linked. Since Figure 5 shows that alumina particles are cross-linked, it is understood that cutting insert 12 had the cutting blade 2 and the base 3 strongly bonded with each other. It is also understood that this strong bonding makes cutting insert 12 a cutting insert with a long service life, excellent in fracture resistance, wear resistance and thermal shock resistance. Compositional images of the other working examples of the cutting insert according to the present invention ensured that metal particles were cross-linked at the lamination interface, although the images are not included in this patent application.
As long as the objectives of the invention are achieved, the cutting insert of the present invention is not limited to the embodiments shown in the figures and the working examples, but may be suitably modified depending on the situations.

### EXPLANATION OF REFERENCE NUMERALS

1, 11 cutting insert
2 cutting blade
3 base
4 cutting tool
5 holder
6 fastener
7 lamination interface

## Claims

1. A cutting insert comprising a base and a cutting blade made of a ceramic including whiskers, the base and the cutting blade integrated with each other, wherein the base has a first coefficient of thermal expansion larger than a second coefficient of thermal expansion that the cutting blade has; and a difference between the first coefficient and the second coefficient is from more than 0 ppm to not more than 3 ppm.

2. The cutting insert according to claim 1, wherein the cutting blade has a matrix made of mainly alumina, the whiskers are made of silicon carbide, and residual stress from more than 0 MPa to not more than 200 MPa is present in a surface of the cutting blade.

3. The cutting insert according to claim 1 or 2, wherein the base is made of a composite material having several phases.

4. The cutting insert according to any one of claims 1-3, wherein the base is made of a cermet.

5. The cutting insert according to any one of claims 1-3, wherein the base is made of a ceramic including silicon carbide particles with an average particle diameter from 1 µm to 5 µm.

6. The cutting insert according to any one of claims 1-5, wherein a ratio W1/W2 of a thickness W1 of the cutting blade to a thickness W2 of the base is from more than 0.1 to not more than 0.7.

7. The cutting insert according to any one of claims 1-6, wherein the cutting blade and the base are integrally formed by hot press sintering or by brazing with a brazing filler metal.

8. A cutting tool equipped with the cutting insert according to any one of claims 1-7.

## Amended claims

### Amended claims in accordance with Rule 137(2) EPC.

**1.** A cutting insert comprising a base and a cutting blade made of a ceramic including whiskers, the base and the cutting blade integrated with each other, wherein the base has a first coefficient of thermal expansion larger than a second coefficient of thermal expansion that the cutting blade has; and a difference between the first coefficient and the second coefficient is from more than 0 ppm/K to not more than 3 ppm/K.

**2.** The cutting insert according to claim 1, wherein the cutting blade has a matrix made of mainly alumina, the whiskers are made of silicon carbide, and residual stress from more than 0 MPa to not more than 200 MPa is present in a surface of the cutting blade.

**3.** The cutting insert according to claim 1 or 2, wherein the base is made of a composite material having several phases.

**4.** The cutting insert according to any one of claims 1-3, wherein the base is made of a cermet.

**5.** The cutting insert according to any one of claims 1-3, wherein the base is made of a ceramic including silicon carbide particles with an average particle diameter from 1 µm to 5 µm.

**6.** The cutting insert according to any one of claims 1-5, wherein a ratio W1/W2 of a thickness W1 of the cutting blade to a thickness W2 of the base is from more than 0.1 to not more than 0.7.

**7.** The cutting insert according to any one of claims 1-6, wherein the cutting blade and the base are integrally formed by hot press sintering or by brazing with a brazing filler metal.

**8.** A cutting tool equipped with the cutting insert according to any one of claims 1-7.
